# DEMANDE DE BREVET EUROPEEN

(11) **EP 1 571 062 A1**
(43) Date de publication de la demande: **07.09.2005**
(21) Numéro de dépôt: 05004491.6
(22) Date de dépôt: 01.03.2005
(51) Int. Cl.: B60T 13/72, B60T 13/57

(54) **Servomoteur a deux sauts differencies par actionneur piezoelectrique**

(30) Priorité: 02.03.2004 FR 0402234
(71) Demandeur: ROBERT BOSCH GMBH, 70442 Stuttgart (DE)
(72) Inventeur: Beylerian, Bruno, 95380 Louvres (FR)
(74) Mandataire: Hurwic, Aleksander Wiktor

(57) **Abrégé**

L'invention propose un servomoteur (10) pneumatique d'actionnement d'un maître-cylindre (28) de freinage de véhicule automobile,du type qui comporte un palpeur (62), formant l'extrémité avant d'un plongeur (56), qui est concentrique à une face avant (26) d'un piston (22) d'un diamètre déterminé et qui, dans la position de repos d'une la tige (46) de commande, est agencé à une première distance (d1) de saut déterminée d'un disque (44) de réaction solidaire de la tige d'actionnement (34) du maître-cylindre (28), caractérisé en ce que le piston (22) comporte une douille (64) tubulaire de longueur (L1, L2) variable par actionneur piézoélectrique qui est susceptible de faire varier la distance de saut de la valeur (d1) à une valeur supérieure (d2).

## Description

L'invention concerne un servomoteur pneumatique d'actionnement d'un maître-cylindre de freinage de véhicule automobile.

L'invention concerne plus particulièrement un servomoteur pneumatique d'actionnement d'un maître-cylindre de freinage de véhicule automobile, du type qui comporte une enveloppe rigide à l'intérieur de laquelle est mobile une cloison transversale délimitant de façon étanche une chambre avant, soumise à une première pression, et une chambre arrière soumise à une deuxième pression variant entre la première pression et une pression supérieure, du type qui comporte un piston mobile, solidaire de la cloison mobile, dont une face avant est susceptible de solliciter une tige d'actionnement du maître-cylindre, du type qui comporte une tige de commande du servomoteur se déplaçant dans le piston sélectivement en fonction d'un effort axial d'entrée exercé vers l'avant à l'encontre d'un effort de rappel exercé sur la tige par un ressort de rappel, du type qui comporte un plongeur qui est agencé à l'avant et solidaire de la tige de commande dans le piston et qui comporte à son extrémité arrière au moins un siège annulaire arrière d'un clapet à trois voies qui est mobile progressivement entre une position dans laquelle, la tige de commande étant au repos, la chambre avant et la chambre arrière sont en communication, et une position dans laquelle, la tige de commande étant actionnée, la deuxième pression régnant dans la chambre arrière augmente, le clapet mettant la chambre arrière en communication avec la pression supérieure, et du type qui comporte un palpeur, formant l'extrémité avant du plongeur, qui est concentrique à une face avant du piston d'un diamètre déterminé et qui, dans la position de repos de la tige de commande, est agencé à une première distance de saut déterminée d'un disque de réaction qui est agencé en regard de la face avant du piston de diamètre et qui est logé dans une cage solidaire de la tige d'actionnement du maître-cylindre, du type dans lequel le palpeur est susceptible, lorsqu'un effort de freinage est appliqué à la tige de commande selon une vitesse supérieure à une vitesse déterminée, de parcourir la première distance de saut puis de pénétrer le disque de réaction de manière qu'il se déforme et transmette au piston et au plongeur l'effort de réaction du maître-cylindre, le quotient des intensités des efforts transmis au plongeur et à la face avant du piston déterminant un rapport d'assistance déterminé.

On connaît de nombreux exemples de servomoteurs conventionnels de ce type.

Dans un tel servomoteur, la distance séparant le premier palpeur du disque de réaction, est appelée "distance de saut" et elle correspond à la distance théorique que le palpeur doit parcourir avant que le conducteur du véhicule ne ressente l'effort de réaction du maître-cylindre.

Dans la pratique, lorsqu'il existe un jeu entre le premier palpeur et le disque de réaction, cette distance correspond à la distance séparant le premier palpeur du disque de réaction, mais elle peut aussi, lorsque qu'il n'existe pas à proprement parler de jeu et que le disque de réaction est initialement décomprimé au contact du palpeur, correspondre à la course selon laquelle le premier palpeur est susceptible de comprimer le disque de réaction jusqu'à ce qu'il soit totalement comprimé.

Dans une situation de freinage extrême pour laquelle un effort de freinage maximal est exercé sur la tige de commande, l'actionnement de la tige du commande provoque le déplacement du plongeur comportant le premier palpeur, ce qui provoque l'ouverture maximale du clapet à trois voies et la mise à la pression atmosphérique de la chambre arrière. Du fait du retard à l'équilibrage de la pression dans la chambre arrière, le palpeur se déplace avant que la cloison mobile ne se déplace et le palpeur pénètre dans le disque de réaction en matériau élastomère qui est solidaire de la face arrière du piston mobile en le comprimant.

Ainsi, l'effort exercé sur la tige d'actionnement du maître-cylindre résulte de l'effort d'assistance qui est provoqué par la différence de pression de chaque côté de la paroi mobile et de l'effort exercé par le plongeur formant palpeur sur le disque de réaction. Le conducteur du véhicule ressent par ailleurs l'effort de réaction du freinage, qui est transmis du maître-cylindre au plongeur par l'intermédiaire du disque de réaction.

Avec des véhicules équipés de servomoteurs conformes à cette première conception, on a constaté que bon nombre de conducteurs, confrontés à une situation de freinage d'urgence, sous-estimaient les risques encourus, et que, après avoir freiné brutalement, ils relâchaient leur effort de freinage alors que le maintien d'un effort de freinage était indispensable pour éviter un accident.

En effet, dans le cas d'une situation de freinage extrême accompagnée d'un déplacement rapide de la tige de commande, le plongeur peut venir au contact du disque de réaction et transmettre au conducteur une sensation de freinage maximal avant même que la différence de pression ne soit maximale entre les chambres de pression avant et arrière, ce qui peut conduire le conducteur à relâcher son effort, quand bien même il devrait être maintenu pour bénéficier de l'effort de freinage maximal.

Pour remédier à cet inconvénient, on a proposé, selon une deuxième conception, un servomoteur qui comporte un premier palpeur qui est monté coulissant par rapport au plongeur pour pénétrer dans le disque de réaction puis qui peut, lorsque la tige de commande du servomoteur est actionnée à une vitesse déterminée, être verrouillé par rapport au piston mobile de manière à maintenir un effort de freinage maximal sur la tige d'actionnement du maître cylindre via le disque de réaction quand bien même le conducteur aurait partiellement relâché son effort.

Cette deuxième conception présente l'inconvénient de ne permettre de faire varier la distance de saut du servomoteur qu'en cas de freinage d'urgence. intensités des efforts transmis au plongeur 56 et à la face avant 26 du piston 22 déterminant de manière connue un rapport d'assistance déterminée.

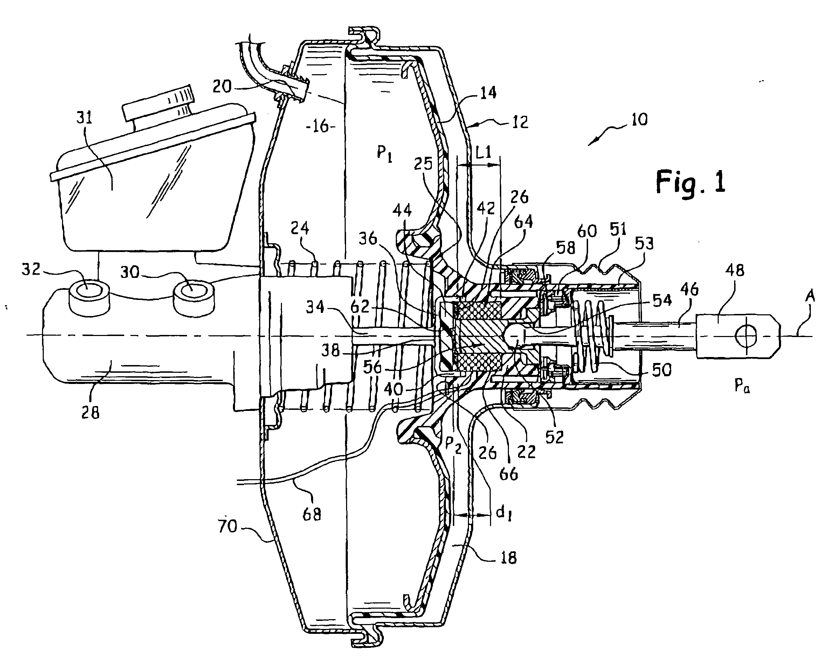

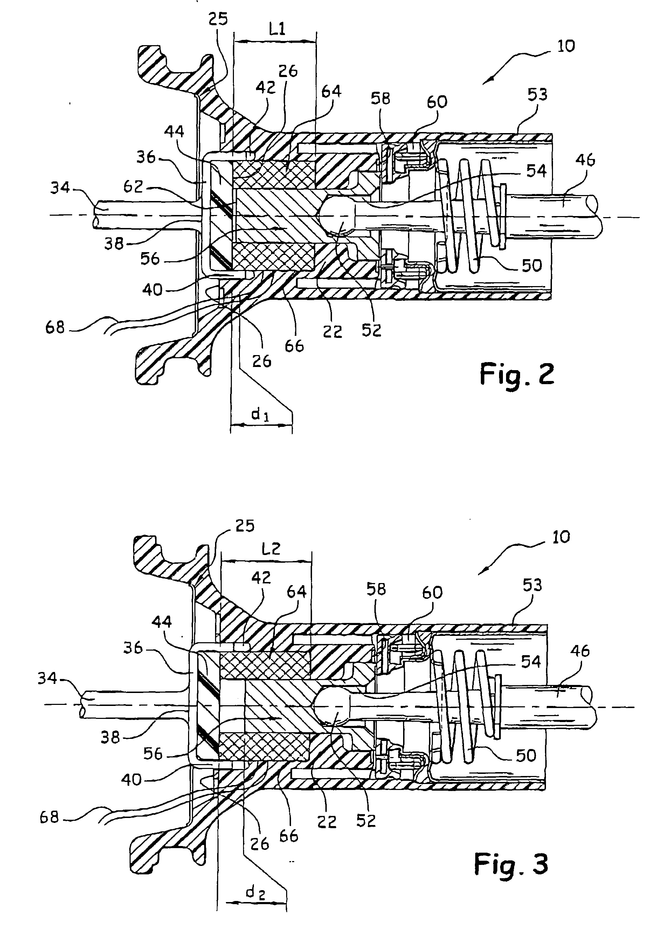

Conformément à l'invention, le piston 22 comporte une douille tubulaire 64 du diamètre déterminé, qui est montée autour du plongeur 56, dont l'extrémité forme la face avant 26 du piston 22, et qui comporte un actionneur axial interne qui est susceptible, comme l'illustre la figure 3, de faire croître la longueur initiale "L1" de la douille 64 jusqu'à une longueur "L2" supérieure, pour faire varier la position de la face avant 26 du piston 22 afin de repousser le disque 34 de réaction de manière que l'application rapide d'un effort de freinage puisse être effectuée, selon une seconde distance "d2" de saut de valeur supérieure à la première distance "d1" de saut déterminée.

Avantageusement, l'actionneur axial interne peut être commandé à distance, par exemple depuis un tableau de bord du véhicule dans lequel est monté le servomoteur, de manière à permettre de faire varier la distance de saut par enfoncement d'un bouton agencé au tableau de bord du véhicule pour modifier la sensation ressentie à la pédale de frein par le conducteur du véhicule, en proposant par exemple une position associée à un freinage sportif et une position associée à un freinage de confort.

Plus particulièrement, l'actionneur axial interne (non représenté) est un actionneur piézoélectrique dont la longueur varie entre une première valeur associée à la longueur initiale "L1" de la douille 64 en l'absence d'impulsion de tension électrique et une seconde valeur associée à la longueur supérieure "L2" de la douille 64 lorsqu'il est soumis à une impulsion de tension électrique déterminée.

La commande de l'actionneur piézoélectrique peut donc par exemple être réalisée par un interrupteur électrique agencé au tableau de bord du véhicule.

De surcroît, il est possible d'agencer dans le servomoteur un capteur (non représenté) de la course de la tige 46 de commande qui est susceptible, pour une course élevée de la tige 46 de commande associée à un freinage d'urgence, de transmettre une information à un calculateur embarqué du véhicule pour que celui-ci, en lieu et place de l'interrupteur précédemment mentionné, commande l'actionnement de l'actionneur piézoélectrique de manière à ramener automatiquement la distance de saut à la valeur "d1" pour permettre un freinage rapide et efficace.

Avantageusement, pour permettre une alimentation ponctuelle de l'actionneur piézoélectrique et ne pas devoir alimenter en permanence ledit actionneur pour le maintenir dans l'une ou l'autre de ses longueurs associées aux longueurs "L1" ou "L2" de la douille 64, l'actionneur axial interne est de préférence réalisé sous la forme d'un actionneur piézoélectrique dit bistable dont le basculement d'une valeur stable de longueur à l'autre valeur stable de longueur est commandé par une impulsion de tension électrique de durée réduite.

Il est donc possible par cette conception d'assurer le basculement de l'actionneur d'un état à l'autre, et donc de provoquer le changement de longueur "L1, L2" de la douille 64 en ne soumettant l'actionneur qu'à une seule brève impulsion électrique.

Cette conception permet par ailleurs d'éviter le changement de longueur de la douille 64 en cas de défaillance de son alimentation électrique.

Dans le mode de réalisation préféré de l'invention, la douille 64 est reçue dans un alésage 66 complémentaire du piston 22. Elle y est par exemple montée à force, collée, ou immobilisée par un moyen (non représenté) d'immobilisation axiale. Cette conception permet avantageusement de démonter la douille en cas de défaillance de l'actionneur piézoélectrique.

Par ailleurs, un câble 68 d'alimentation de l'actionneur piézoélectrique traverse radialement le piston 22, la cloison transversale mobile 14, et une face avant 70 de l'enveloppe 12 du servomoteur 10. Cette conception permet d'acheminer l'impulsion électrique depuis l'extérieur du servomoteur 10 vers l'actionneur piézoélectrique. Ainsi, l'actionneur piézoélectrique peut être commandé par des moyens de contrôle (non représentés) externes au servomoteur 10 pour commander le choix d'une distance de saut "d1" ou "d2" appropriée.

L'invention permet donc avantageusement de moduler l'intensité de l'effort de freinage à fournir dans le cadre d'une application rapide en ayant recours à un actionneur piézoélectrique susceptible de réagir très rapidement, ce qui permet au conducteur de maintenir en toutes circonstances un effort de freinage après cette application rapide.

## Revendications

1. Servomoteur (10) pneumatique d'actionnement d'un maître-cylindre (28) de freinage de véhicule automobile,
du type qui comporte une enveloppe (12) rigide à l'intérieur de laquelle est mobile une cloison (14) transversale mobile délimitant de façon étanche une chambre avant (16), soumise à une première pression (P₁), et une chambre arrière (18) soumise à une deuxième pression (P₂) variant entre la première pression et une pression supérieure (Pₐ),
du type qui comporte un piston (22) mobile, solidaire de la cloison (14) mobile, dont une face avant (26) est susceptible de solliciter une tige (34) d'actionnement du maître-cylindre (28),
du type qui comporte une tige (46) de commande du servomoteur (10) se déplaçant dans le piston (22) sélectivement en fonction d'un effort axial d'entrée exercé vers l'avant à l'encontre d'un effort de rappel exercé sur la tige (46) par un ressort (50) de rappel,
du type qui comporte un plongeur (56) qui est agencé à l'avant et solidaire de la tige (46) de commande dans le piston (22) et qui comporte à son extrémité arrière au moins un siège annulaire arrière (58) d'un clapet (60) à trois voies qui est mobile progressivement entre une position dans laquelle, la tige (46) de commande étant au repos, la chambre avant (16) et la chambre arrière sont (18) en communication, et une position dans laquelle, la tige (46) de commande étant actionnée, la deuxième pression (P₂) régnant dans la chambre arrière (18) augmente, le clapet (60) mettant la chambre arrière (18) en communication avec la pression supérieure (Pₐ), et
du type qui comporte un palpeur (62), formant l'extrémité avant du plongeur (56), qui est concentrique à une face avant (26) du piston (22) d'un diamètre déterminé et qui, dans la position de repos de la tige (46) de commande, est agencé à une première distance (d1) de saut déterminée d'un disque (44) de réaction qui est agencé en regard de la face avant (26) du piston de diamètre (22) et qui est logé dans une cage (36) solidaire de la tige d'actionnement (34) du maître-cylindre (28),
du type dans lequel le palpeur (62) est susceptible, lorsqu'un effort de freinage est appliqué à la tige (46) de commande selon une vitesse supérieure à une vitesse déterminée, de parcourir la première distance de saut (d1) puis de pénétrer le disque (44) de réaction de manière qu'il se déforme et transmette au piston (22) et au plongeur (56) l'effort de réaction du maître-cylindre, le quotient des intensités des efforts transmis au plongeur (56) et à la face avant (26) du piston (22) déterminant un rapport d'assistance déterminé,
**caractérisé en ce que** le piston (22) comporte une douille (64) tubulaire du diamètre déterminé, qui est montée autour du plongeur (56), dont l'extrémité forme la face avant (26) du piston (22), et qui comporte un actionneur axial interne susceptible de faire croître la longueur initiale (L1) de la douille (64) jusqu'à une longueur (L2) supérieure, pour faire varier la position de la face avant (26) du piston (22) afin de repousser le disque (44) de réaction de manière que l'application rapide d'un effort de freinage puisse être effectuée, selon une seconde distance (d2) de saut de valeur supérieure à la première distance (d1) de saut déterminée.

2. Servomoteur (10) selon la revendication précédente, **caractérisé en ce que** l'actionneur axial interne est un actionneur piézoélectrique dont la longueur varie entre une première valeur associé à la longueur (L1) initiale de la douille en l'absence d'impulsion de tension électrique et une seconde valeur associée à la longueur (L2) supérieure de la douille (64) lorsqu'il est soumis à une impulsion de tension électrique déterminée.

3. Servomoteur (10) selon la revendication 1 , **caractérisé en ce que** l'actionneur axial interne est un actionneur piézoélectrique dit bistable dont le basculement d'une valeur stable de longueur à l'autre valeur stable de longueur est commandé par une impulsion de tension électrique de durée réduite.

4. Servomoteur (10) selon l'une quelconque des revendications précédentes, **caractérisé en ce que** la douille (64) est reçue dans un alésage (66) complémentaire du piston (22),

5. Servomoteur (10) selon l'une quelconque des revendications précédentes, **caractérisé en ce qu'**un câble (68) d'alimentation de l'actionneur piézoélectrique traverse le piston (22), la cloison (14) transversale mobile, et une face avant (70) de l'enveloppe (12) du servomoteur (10).

6. Servomoteur (10) selon l'une quelconque des revendications précédentes, **caractérisé en ce que** la cage recevant le disque de réaction est constituée d'une coupelle (36), coaxiale au piston (22), qui est solidaire de l'extrémité arrière (38) de la tige (34) d'actionnement et dont une partie tubulaire arrière (40) est montée coulissante dans une gorge (42) annulaire coaxiale de la face avant du piston (22).

7. Véhicule automobile comportant un servomoteur (10) selon l'une quelconque des revendications 2 à 6, **caractérisé en ce qu'**un tableau de bord du véhicule comporte un interrupteur susceptible de délivrer au moins une impulsion électrique permettant de faire varier la longueur de l'actionneur piézoélectrique.

8. Véhicule automobile selon la revendication précédente, **caractérisé en ce que** le servomoteur comporte un capteur de la course de la tige (46) de commande qui est susceptible, pour une course élevée de la tige (46) de commande associée à un freinage d'urgence, de transmettre une information à un calculateur embarqué du véhicule pour que ledit calculateur, en lieu et place de l'interrupteur, commande l'actionnement de l'actionneur piézoélectrique de manière à faire varier automatiquement la distance de saut.
